# EUROPEAN PATENT APPLICATION

(11) **EP 2 472 964 A1**
(43) Date of publication of application: **04.07.2012**
(21) Application number: 10791412.9
(22) Date of filing: 28.05.2010
(51) Int. Cl.: H04W 52/04

(54) **POWER CONTROL METHOD AND TERMINAL DEVICE**

(30) Priority: 30.12.2009 CN 200910266040
(71) Applicant: ZTE Corporation, Shenzhen, Guangdong 518057 (CN)
(72) Inventor: ZHANG, Haiyan, Shenzhen Guangdong 518057 (CN)
(74) Representative: Grey, Ian Michael
(86) International application number: PCT/CN2010/073348
(87) International publication number: WO 2010/148906

(57) **Abstract**

The present invention discloses a power control method and a terminal device. The method comprises: when transmission power required by a terminal exceeds maximum transmission power, the terminal calculating gain factor values required for non-scheduling grant services on a primary carrier and a secondary carrier respectively; the terminal decreasing a gain factor value of a channel on at least one of the primary carrier and the secondary carrier, wherein the decreased gain factor value is no less than the maximum of the calculated gain factor value on the at least one of the primary carrier and the secondary carrier and the minimum gain factor value configured for the at least one of the primary carrier and the secondary carrier at a network side; and the terminal determining actual transmission power based on the decreased gain factor value.

## Description

### Technical Field

The present invention relates to communication field, and in particularly, to a power control method and terminal device.

### Background of the Related Art

The High Speed Uplink Packet Access (HSUPA) technology attempts to improve capacity and data throughput in the uplink direction, and reduce delay in the dedicated channel. A new transmission channel, i.e., Enhanced Dedicated Channel (E-DCH for short), is introduced by the high-speed uplink packet access technology to improve implementation of a physical layer and a media access control layer so as to achieve a maximum theoretical uplink data rate of 5.6 Mb/s.

Services may be transmitted on the E-DCH in a non-scheduling grant mode or a scheduling grant mode. The services using non-scheduling grant are generally services with very strong signaling and real-time, resources of which may be reserved by a base station according to the level of the non-scheduling grant required by a Radio Network Controller (RNC), that is to say, the services may be transmitted automatically without scheduling of the base station. The services using scheduling grant may be scheduled by the base station using absolute grant or relative grant.

With the development of the technology, it is desirable that the Dual Carrier High Speed Uplink Packet Access (DC-HSUPA) technology is introduced into the existing systems. This technology allows the terminal to send data on two carriers with the high speed uplink packet access technology such that the uplink data rate may be multiplied. One of the two carriers is referred to as a primary carrier, and the other is referred to as secondary carrier.

In the existing technology, when the required power is greater than the maximum transmission power, a terminal decreases a gain factor of the enhanced dedicated physical data control channel (E-DPDCH) on a carrier so as to decrease the transmission power of this channel. This gain factor may be decreased at most to the minimum value configured for the terminal by the RNC. If the power is still limited when the gain factor of the E-DPDCH on this carrier has been decreased to the minimum value, the gain factor of the E-DPDCH on another carrier may be decreased.

In the existing technology, in the case that the total power resources are enough to guarantee the non-scheduling grant services completely, because a portion of the power resources is allocated to the scheduling grant services on the secondary carrier, the non-scheduling grant services on the primary carrier can not obtain sufficient power, thereby degrading the performance.

### Content of the Invention

Embodiments of the present invention provide a power control method and a terminal device in order to improve the transmission performance of non-scheduling grant services.

A power control method comprises the steps of:
when transmission power required by a terminal exceeds maximum transmission power, the terminal calculating gain factor values required for non-scheduling grant services on a primary carrier and a secondary carrier respectively;
the terminal decreasing a gain factor value of a channel on at least one of the primary carrier and the secondary carrier, wherein the decreased gain factor value is no less than the maximum of the calculated gain factor value on the at least one of the primary carrier and the secondary carrier and the minimum gain factor value configured for the at least one of the primary carrier and the secondary carrier at a network side; and
the terminal determining actual transmission power based on the decreased gain factor value.

When there are no non-scheduling grant services on the carriers, the gain factor value required for the non-scheduling grant services is 0.

When the gain factor value required for the non-scheduling grant services on the carriers is 0, the step of the terminal decreasing the gain factor value of the channel on the at least one of the primary carrier and the secondary carrier comprises: the terminal preferentially decreasing the gain factor value of the channel on the carrier with the gain factor value required for the non-scheduling grant services being 0.

The step of the terminal decreasing the gain factor value of the channel on the at least one of the primary carrier and the secondary carrier comprises: the terminal preferentially decreasing the gain factor value of the channel on the carrier in which an Enhanced Dedicated Physical Control Channel (E-DPCCH) with the highest power is located.

If the power is still limited after the terminal decreases the gain factor values of the primary carrier and the secondary carrier to the maximum of the calculated gain factor values and the minimum gain factor value configured for the at least one of the primary carrier and the secondary carrier at the network side, the terminal continues to decrease the gain factor value of the channel of the primary carrier and/or the secondary carrier.

A terminal device applied in a dual carrier system comprises:
a gain factor calculating module configured to, when a secondary pilot is activated and transmission power required by the terminal device exceeds maximum transmission power, calculate gain factor values required for non-scheduling grant services on a primary carrier and a secondary carrier respectively;
a gain factor adjusting module configured to decrease a gain factor value of a channel on at least one of the primary carrier and the secondary carrier, wherein the decreased gain factor value is no less than the maximum of the calculated gain factor value on the at least one of the primary carrier and the secondary carrier and the minimum gain factor value configured for the at least one of the primary carrier and the secondary carrier at a network side; and
a power module configured to determine actual transmission power based on the decreased gain factor value.

The gain factor calculating module is configured to, when there are no non-scheduling grant services on the carriers, calculate the gain factor value required for the non-scheduling grant services to be 0.

The gain factor adjusting module is further configured to, when the gain factor value required for the non-scheduling grant services on the carriers is 0, preferentially decrease the gain factor value of the channel on the carrier with the gain factor value required for the non-scheduling grant services being 0.

The gain factor adjusting module is further configured to preferentially decrease the gain factor value of the channel on the carrier in which an Enhanced Dedicated Physical Control Channel (E-DPCCH) with the highest power is located.

The gain factor adjusting module is further configured to, after decreasing the gain factor values of the primary carrier and the secondary carrier to the maximum of the calculated gain factor values and the minimum gain factor value configured for the at least one of the primary carrier and the secondary carrier at the network side, if the power is still limited, continue to decrease the gain factor value of the channel of the primary carrier and/or the secondary carrier.

In the embodiments of the present invention, the gain factor values required for the non-scheduling grant services of the primary carrier and secondary carrier are calculated when the power is limited, when the terminal decreases the actual transmission power by decreasing the gain factor value of the channel, the gain factor value should be no less than the gain factor value required for the non-scheduling grant services as far as possible to guarantee the transmission performance of the non-scheduling grant services. Therefore, the embodiments of the present invention can improve transmission performance of the non-scheduling grant services compared with the existing technology.

### Brief Description of Drawings

FIG. 1 is a flowchart of a method for controlling power in accordance with an embodiment of the present invention;
FIG. 2 is a flowchart of a method for controlling power in accordance with an embodiment of the present invention in the first case;
FIG. 3 is a flowchart of a method for controlling power in accordance with an embodiment of the present invention in the second case;
FIG. 4 is a flowchart of a method for controlling power in accordance with an embodiment of the present invention in the third case; and
FIG. 5 is a block diagram of a terminal device in accordance with an embodiment of the present invention.

### Preferred Embodiments of the Present Invention

In embodiments of the present invention, gain factor values required for non-scheduling grant services of a primary carrier and secondary carrier are calculated when power is limited, when a terminal decreases the actual transmission power by decreasing a gain factor value of a channel, the gain factor value should be no less than the gain factor value required for the non-scheduling grant services as far as possible to guarantee the transmission performance of the non-scheduling grant services. Therefore, the embodiments of the present invention can improve transmission performance of the non-scheduling grant services compared with the existing technology.

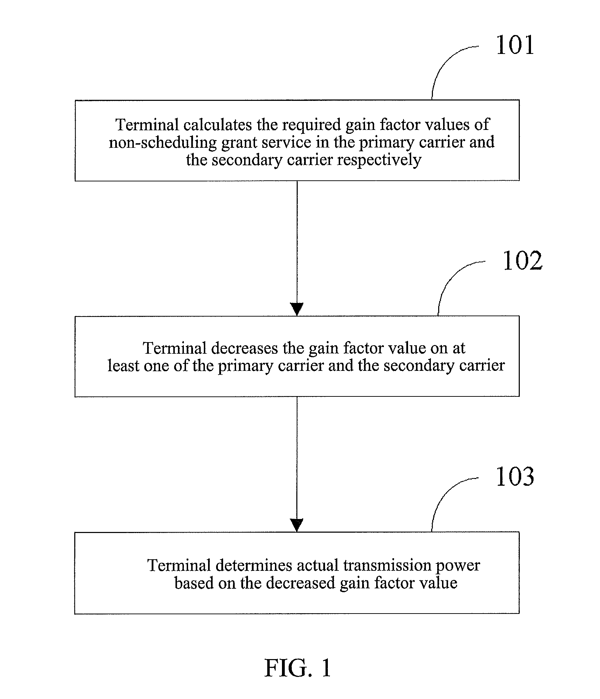

Referring to FIG. 1, a flowchart of a method for controlling power in accordance with an embodiment of the present invention will be described.

In step 101, when a secondary pilot is activated and transmission power required by a terminal exceeds the maximum transmission power, the terminal calculates gain factor values required for non-scheduling grant services on a primary carrier and a secondary carrier respectively.

In step 102, the terminal decreases a gain factor value on at least one of the primary carrier and the secondary carrier, wherein the decreased gain factor value is no less than the maximum of the calculated gain factor value on the at least one of the primary carrier and the secondary carrier and the minimum gain factor value configured for the at least one of the primary carrier and the secondary carrier at a network side.

In step 103, the terminal determines actual transmission power based on the decreased gain factor value.

There are three cases in this embodiments, the first case where there are non-scheduling grant services on the primary carrier and there are no non-scheduling grant services on the secondary carrier, the second case where there are no non-scheduling grant services in the primary carrier and there are non-scheduling grant services on the secondary carrier, and the third case where there are non-scheduling grant services on both the primary carrier and the secondary carrier. The implementation processes of the three cases will be described in detail through three embodiments. If there are no non-scheduling grant services on both the primary carrier and the secondary carrier, the scheme of the existing technology may be used.

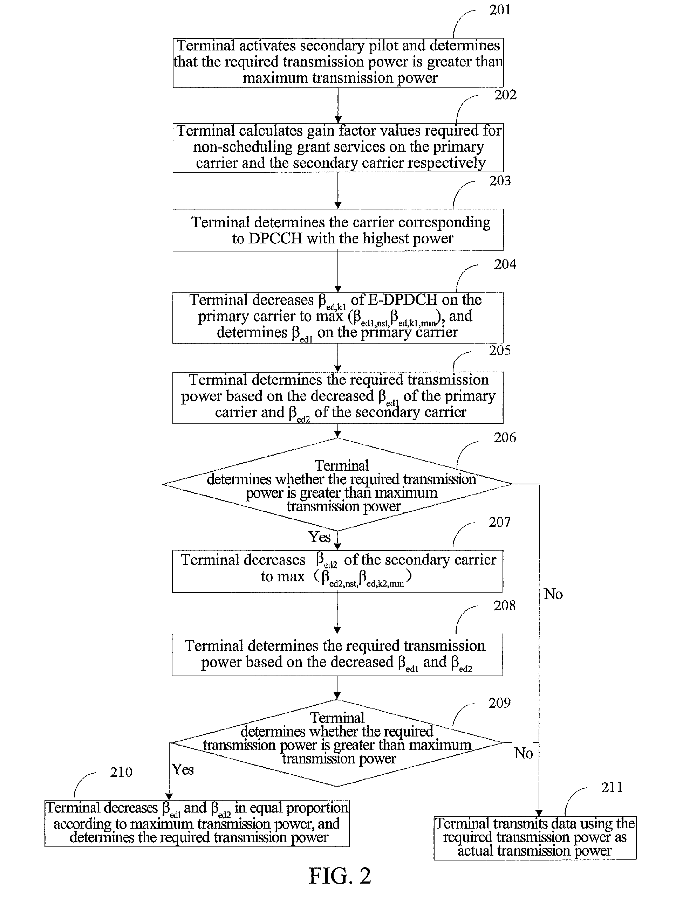

Referring to FIG. 2, a flowchart of a method for controlling power in accordance with an embodiment of the present invention in the first case will be described below.

In step 201, a terminal activates a secondary pilot and determines that the required transmission power is greater than the maximum transmission power. The terminal activates the secondary pilot means that the services will be carried on both a primary carrier and a secondary carrier.

In step 202, the terminal calculates gain factor values required for non-scheduling grant services on the primary carrier and the secondary carrier, respectively. Since there are no non-scheduling grant services on the secondary carrier, the calculated gain factor value β_{ed2,nst} on the secondary carrier is 0. In the specific implementation process of this step, the terminal determines the power P required to transmit the non-scheduling grant services on the E-DPDCH based on the transmission block size of the non-scheduling grant services, the power P*_{DPCCH}* of the dedicated physical control channel (DPCCH) is determined in real-time by an inner loop control, then β_{ed,nst} may be calculated according to the formula P=β_{ed,nst}² · P *_{DPCCH}*, where β_{ed,nst} is no less than 0.

In step 203, the terminal determines a carrier corresponding to the DPCCH with the maximum power. For example, the power of the DPCCH on the primary carrier is greater than the power of the DPCCH on the secondary carrier. For the carrier corresponding to the DPCCH with the maximum power, the drop space of the power may be larger and thus its influence on service transmission on the carrier is relatively small.

In step 204, the terminal decreases the gain factor value β_{ed,k1} of the E-DPDCH on the primary carrier to max (β_{ed,nst}, β_{ed,k1,mm}), and determines the gain factor value β_{ed1} on the primary carrier. β_{ed,k1,min} is the minimum gain factor value configured for the primary carrier of the terminal at the network side. The terminal may also decrease the gain factor value β_{ed,k1} of the E-DPDCH on the primary carrier according to a preset step length, and then determine whether the totally required transmission power is greater than the maximum transmission power according to the decreased gain factor value β_{ed1} of the primary carrier and the current gain factor value β_{ed2}, and if yes, the terminal continues to decrease β_{ed,k1} according to the step length until β_{ed,k1} is decreased to max(β_{ed1,nst}, β_{ed,k1,min}), and executes step 207, otherwise, the terminal executes step 211. In addition to a gain factor value of a data channel, a gain factor value of a control channel may also be adjusted. The gain factor value of the data channel (such as the gain factor value of the E-DPDCH) is preferentially adjusted in order to control the transmission efficiency of the control channel in the embodiment.

In step 205, the terminal determines the required transmission power based on the decreased gain factor value β_{ed1} of the primary carrier and the gain factor value β_{ed2} of the secondary carrier.

In step 206, the terminal determines whether the required transmission power is greater than the maximum transmission power, and if yes, executes step 207, otherwise, executes step 211.

In step 207, the terminal decreases the gain factor value β_{ed2} of the secondary carrier to max (β_{ed2,nst}, β_{ed,k2,min}). The terminal may also decrease the gain factor value β_{ed,k2} of the E-DPDCH on the secondary carrier according to the preset step length, and then determine whether the totally required transmission power is greater than the maximum transmission power based on the decreased gain factor value β_{ed1} of the primary carrier and the decreased gain factor value β_{ed2} of the secondary carrier, and if yes, the terminal continues to decrease β_{ed,k2} according to the step length until β_{ed,k2} is decreased to max(β_{ed2,nst}, β_{ed,k2,min}), and executes step 208, otherwise, the terminal executes step 211.

In step 208, the terminal determines the required transmission power based on the decreased β_{ed1} and β_{ed2}.

In step 209, the terminal determines whether the required transmission power is greater than the maximum transmission power, and if yes, executes step 210, otherwise, executes step 211.

In step 210, the terminal decreases β_{ed1} and β_{ed2} in equal proportion according to the maximum transmission power, and determines the required transmission power.

Prior to the step 210, β_{ed} on the carrier determined in the step 203 may be decreased to β_{ed,k1,min} first, and then whether the required transmission power is greater than the maximum transmission power is determined, and if yes, β_{ed} in the other carrier is decreased to β_{ed,k,min}, then whether the required transmission power is greater than the maximum transmission power is determined again, and if yes, step 210 is executed, if any of the above two determinations is negative, step 211 is executed.

In step 211, the terminal transmits data using the required transmission power as the actual transmission power. Specifically, the terminal preferentially transmits data of the non-scheduling grant services according the finally determined actual transmission power.

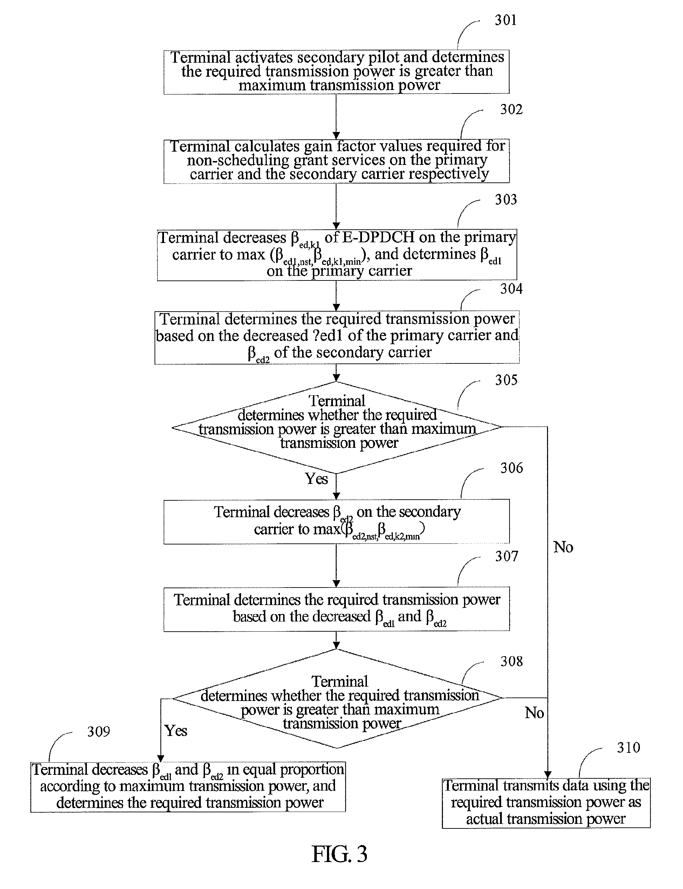

Referring to FIG. 3, a flowchart of a method for controlling power in accordance with an embodiment of the present invention in the second case will be described below

In step 301, a terminal activates a secondary pilot and determines that the required transmission power is greater than the maximum transmission power. The terminal activates the secondary pilot means that the services will be carried on both a primary carrier and a secondary carrier.

In step 302, the terminal calculates gain factor values required for non-scheduling grant services on the primary carrier and the secondary carrier, respectively. Since there are no non-scheduling grant services on the primary carrier, the calculated gain factor value β_{ed2,nst} on the primary carrier is 0.

In step 303, the terminal decreases the gain factor value p_{ed,k1} of the E-DPDCH on the primary carrier to max (β_{ed1,nst}, β_{ed,k1,mim}), and determines the gain factor value β_{ed1} on the primary carrier. β_{ed,k1,mm} is the minimum gain factor value configured for the primary carrier of the terminal at the network side. The terminal preferentially decreases the gain factor value β_{ed,k} of the E-DPDCH on the carrier corresponding to the smaller one of the calculated gain factor values β_{ed,nst} on the primary carrier and the secondary carrier, especially preferentially decreases the gain factor value β_{ed,k} of the E-DPDCH on the carrier with the value β_{ed,nst} being 0.

In step 304, the terminal determines the required transmission power based on the decreased gain factor value β_{ed1} of the primary carrier and the gain factor value β_{ed2} of the secondary carrier.

In step 305, the terminal determines whether the required transmission power is greater than the maximum transmission power, and if yes, executes step 306, otherwise, executes step 310.

In step 306, the terminal decreases the gain factor value β_{ed2} of the secondary carrier to max (β_{ed2,nst}, β_{ed,k2,min}).

In step 307, the terminal determines the required transmission power based on the decreased β_{ed1} and β_{ed2}.

In step 308, the terminal determines whether the required transmission power is greater than the maximum transmission power, and if yes, executes step 309, otherwise, executes step 310.

In step 309, the terminal decreases β_{ed1} and β_{ed2} in equal proportion according to the maximum transmission power, and determines the required transmission power.

In step 310, the terminal transmits data using the required transmission power as the actual transmission power. Specifically, the terminal preferentially transmits data of the non-scheduling grant services according the finally determined actual transmission power.

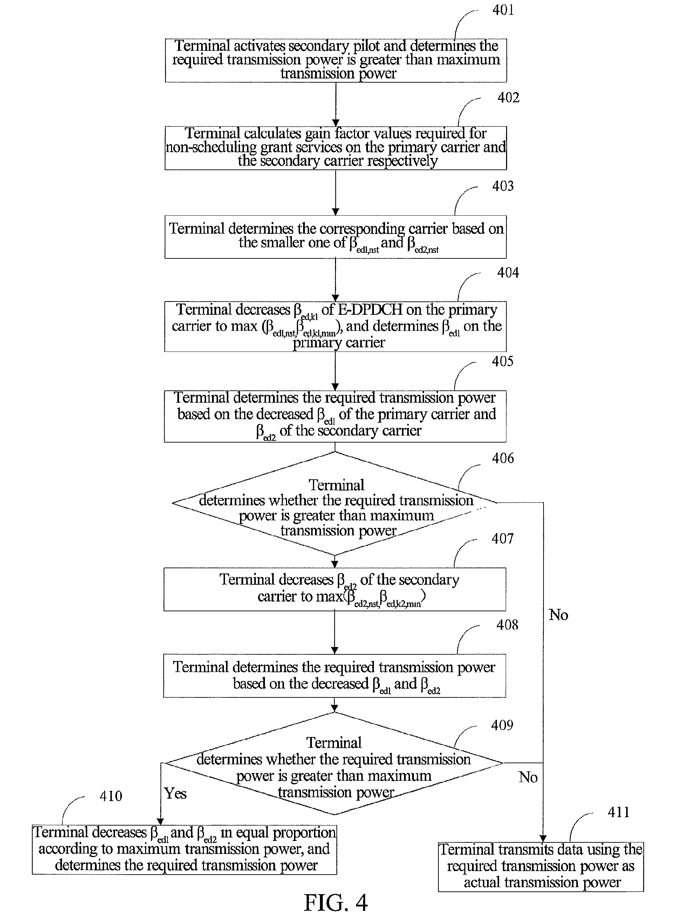

Referring to FIG. 4, a flowchart of a method for controlling power in accordance with an embodiment of the present invention in the third case will be described below

In step 401, a terminal activates a secondary pilot and determines that the required transmission power is greater than the maximum transmission power. The terminal activates the secondary pilot means that the services will be carried on both a primary carrier and a secondary carrier.

In step 402, the terminal calculates gain factor values required for non-scheduling grant services on the primary carrier and the secondary carrier, respectively. Since there are non-scheduling grant services on both the primary carrier and the secondary carrier, both the calculated gain factor value β_{ed1,nst} and β_{ed2,nst} are greater than 0.

In step 403, the terminal determines the corresponding carrier based on the smaller one of β_{ed1,nst} and β_{ed2,nst}. For example, β_{ed1,nst} of the DPCCH on the primary carrier is less than β_{ed2,nst} of the DPCCH on the secondary carrier. The corresponding carrier may be determined based on the DPCCH with the highest power in this embodiment.

In step 404, the terminal decreases the gain factor value β_{ed,k1} of the E-DPDCH on the primary carrier to max (β_{ed1,nst}, β_{ed,k1,min}), and determines the gain factor value β_{ed1} on the primary carrier. β_{ed,k1,min} is the minimum gain factor value configured for the primary carrier of the terminal at the network side.

In step 405, the terminal determines the required transmission power based on the decreased gain factor value β_{ed1} of the primary carrier and the gain factor value β_{ed2} of the secondary carrier.

In step 406, the terminal determines whether the required transmission power is greater than the maximum transmission power, and if yes, executes step 407, otherwise, executes step 411.

In step 407, the terminal decreases the gain factor value β_{ed2} of the secondary carrier to max (β_{ed2,nst}, β_{ed,k2,min}) .

In step 408, the terminal determines the required transmission power based on the decreased β_{ed1} and β_{ed2}.

In step 409, the terminal determines whether the required transmission power is greater than the maximum transmission power, and if yes, executes step 410, otherwise, executes step 411.

In step 410, the terminal decreases β_{ed1} and β_{ed2} in equal proportion according to the maximum transmission power, and determines the required transmission power.

In step 411, the terminal transmits data using the required transmission power as the actual transmission power. Specifically, the terminal preferentially transmits data of the non-scheduling grant services according the finally determined actual transmission power.

The implementation process of controlling the power is described above, and is mainly implemented by a terminal device. The inner structure and function of the terminal device will be described bellow.

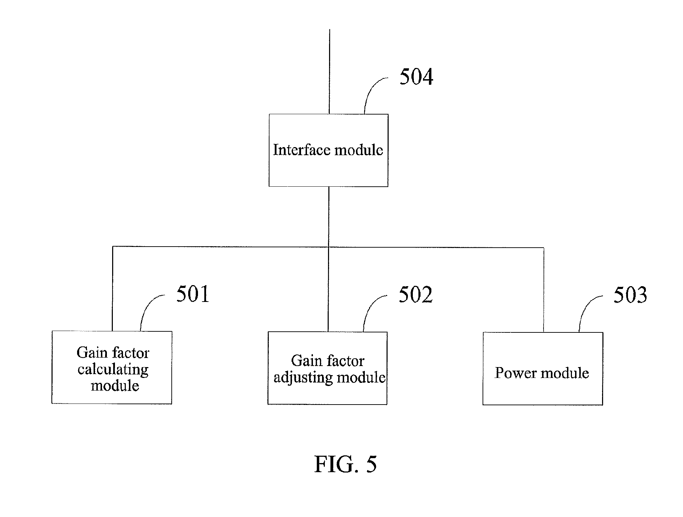

Referring to FIG. 5, the terminal device in accordance with this embodiment comprises a gain factor calculating module 501, a gain factor adjusting module 502, a power module 503 and an interface module 504.

The gain factor calculating module 501 is configured to, when a secondary pilot is activated and transmission power required by a terminal exceeds maximum transmission power, calculate gain factor values required for non-scheduling grant services on a primary carrier and a secondary carrier respectively. The gain factor value of each channel is calculated by the gain factor calculating module 501 in this embodiment.

The gain factor adjusting module 502 is configured to decrease a gain factor value of on at least one of the primary carrier and the secondary carrier, wherein the decreased gain factor value is no less than the maximum of the calculated gain factor value on the at least one of the primary carrier and the secondary carrier and the minimum gain factor value configured for the at least one of the primary carrier and the secondary carrier at a network side; and

The power module 503 is configured to determine actual transmission power based on the decreased gain factor value. The power module 503 calculates the power based on the gain factor value in this embodiment. The power module 503 is also configured to determine whether the required power exceeds the maximum transmission power, and if yes, indicate the gain factor adjusting module 502 to continue the adjustment, otherwise, indicate the interface module 504 in the terminal device to transmit the data using the required transmission power as the actual transmission power.

The interface module 504 is configured to interact with a network side to obtain various configuration information sent by the network side and transmit various data to the network side.

When there are no non-scheduling grant services on the carrier, the gain factor value required for the non-scheduling grant services on this carrier calculated by the gain factor calculating module 501 is 0. When the gain factor value required for the non-scheduling grant services on the carrier is 0, the gain factor adjusting module 502 preferentially decreases the gain factor value on the carrier with the gain factor value required for the non-scheduling grant services being 0.

The gain factor adjusting module 502 may also preferentially decrease the gain factor value of the carrier in which the DPCCH with the highest power is located.

If the power is still limited after the gain factor adjusting module 502 decreases the gain factor values of the primary carrier and the secondary carrier to the maximum of the calculated gain factor values and the minimum gain factor value configured for the at least one of the primary carrier and the secondary carrier at the network side, the gain factor adjusting module 502 continues to decrease the gain factor value of the primary carrier and/or the secondary carrier.

The software used to implement the embodiment of the present invention may be stored in a storage medium, such as disk, hard disk, compact disk and flash memory, and the like.

In the embodiments of the present invention, the gain factor values required for the non-scheduling grant services of the primary carrier and secondary carrier are calculated when the power is limited, when the terminal decreases the actual transmission power by decreasing the gain factor value of the channel, the gain factor value should be no less than the gain factor value required for the non-scheduling grant services as far as possible to guarantee the transmission performance of the non-scheduling grant services. Therefore, the embodiments of the present invention can improve transmission performance of the non-scheduling grant services compared with the existing technology. The embodiment of the present invention may preferentially decrease the gain factor value on the carrier corresponding to the smaller gain factor value required for the non-scheduling grant services, and decrease its influence on the non-scheduling grant services. The embodiment of the present invention may also preferentially decrease the gain factor value on the carrier corresponding to the DPCCH with greater power, and may decrease its influence on various services.

It is apparent that various modifications and variations to the present invention may be made by those skilled in the art without departing from the spirit and scope of the present invention. Thus, if these modifications and variations to the present invention fall into the scope of the claims of the present invention and its equivalent technology, the present invention is intended to cover these modifications and variations.

### Industrial Applicability

In the embodiments of the present invention, the gain factor values required for the non-scheduling grant services of the primary carrier and secondary carrier are calculated when the power is limited, when the terminal decreases the actual transmission power by decreasing the gain factor value of the channel, the gain factor value should be no less than the gain factor value required for the non-scheduling grant services as far as possible to guarantee the transmission performance of the non-scheduling grant services. Therefore, the embodiments of the present invention can improve transmission performance of the non-scheduling grant services compared with the existing technology.

## Claims

1. A power control method comprising the steps of
when transmission power required by a terminal exceeds maximum transmission power, the terminal calculating gain factor values required for non-scheduling grant services on a primary carrier and a secondary carrier respectively;
the terminal decreasing a gain factor value of a channel on at least one of the primary carrier and the secondary carrier, wherein the decreased gain factor value is no less than the maximum of the calculated gain factor value on the at least one of the primary carrier and the secondary carrier and the minimum gain factor value configured for the at least one of the primary carrier and the secondary carrier at a network side; and
the terminal determining actual transmission power based on the decreased gain factor value.

2. The method according to claim 1, wherein when there are no non-scheduling grant services on the carriers, the gain factor value required for the non-scheduling grant services is 0.

3. The method according to claim 2, wherein when the gain factor value required for the non-scheduling grant services on the carriers is 0, the step of the terminal decreasing the gain factor value of the channel on the at least one of the primary carrier and the secondary carrier comprises: the terminal preferentially decreasing the gain factor value of the channel on the carrier with the gain factor value required for the non-scheduling grant services being 0.

4. The method according to claim 1, wherein the step of the terminal decreasing the gain factor value of the channel on the at least one of the primary carrier and the secondary carrier comprises: the terminal preferentially decreasing the gain factor value of the channel on the carrier in which an Enhanced Dedicated Physical Control Channel (E-DPCCH) with the highest power is located.

5. The method according to any one of claims 1 to 4, wherein if the power is still limited after the terminal decreases the gain factor values of the primary carrier and the secondary carrier to the maximum of the calculated gain factor values and the minimum gain factor value configured for the at least one of the primary carrier and the secondary carrier at the network side, the terminal continues to decrease the gain factor value of the channel of the primary carrier and/or the secondary carrier.

6. A terminal device applied in a dual carrier system comprising:
a gain factor calculating module configured to, when a secondary pilot is activated and transmission power required by the terminal device exceeds maximum transmission power, calculate gain factor values required for non-scheduling grant services on a primary carrier and a secondary carrier respectively;
a gain factor adjusting module configured to decrease a gain factor value of a channel on at least one of the primary carrier and the secondary carrier, wherein the decreased gain factor value is no less than the maximum of the calculated gain factor value on the at least one of the primary carrier and the secondary carrier and the minimum gain factor value configured for the at least one of the primary carrier and the secondary carrier at a network side; and
a power module configured to determine actual transmission power based on the decreased gain factor value.

7. The terminal device according to claim 6, wherein the gain factor calculating module is configured to, when there are no non-scheduling grant services on the carriers, calculate the gain factor value required for the non-scheduling grant services to be 0.

8. The terminal device according to claim 7, wherein the gain factor adjusting module is further configured to, when the gain factor value required for the non-scheduling grant services on the carriers is 0, preferentially decrease the gain factor value of the channel on the carrier with the gain factor value required for the non-scheduling grant services being 0.

9. The terminal device according to claim 6, wherein the gain factor adjusting module is further configured to preferentially decrease the gain factor value of the channel on the carrier in which an Enhanced Dedicated Physical Control Channel (E-DPCCH) with the highest power is located.

10. The terminal device according to any one of claims 6 to 9, wherein the gain factor adjusting module is further configured to, after decreasing the gain factor values of the primary carrier and the secondary carrier to the maximum of the calculated gain factor values and the minimum gain factor value configured for the at least one of the primary carrier and the secondary carrier at the network side, if the power is still limited, continue to decrease the gain factor value of the channel of the primary carrier and/or the secondary carrier.
